# EUROPÄISCHE PATENTSCHRIFT

(11) **EP 1 470 324 B1**
(45) Veröffentlichungstag und Bekanntmachung des Hinweises auf die Patenterteilung: **13.08.2008**
(21) Anmeldenummer: 02796495.6
(22) Anmeldetag: 11.11.2002
(51) Int. Cl.: F01P 3/20, B60H 1/00, H02P 9/08

(54) **KÜHLWASSERHEIZUNG MITTELS GENERATORVERLUSTEN**
HEATING OF COOLING WATER USING GENERATOR LOSSES
CHAUFFAGE A EAU FROIDE A L'AIDE DE PERTES DE GENERATEUR

(30) Priorität: 18.01.2002 DE 10201755
(43) Veröffentlichungstag der Anmeldung: 27.10.2004
(73) Patentinhaber: ROBERT BOSCH GMBH, 70442 Stuttgart (DE)
(72) Erfinder: REUTLINGER, Kurt, 70174 Stuttgart (DE)
(86) Internationale Anmeldenummer: PCT/DE2002/004159
(87) Internationale Veröffentlichungsnummer: WO 2003/060296

(56) Entgegenhaltungen:
- WO-A-01/17085
- DE-A- 3 128 081
- DE-A- 10 043 059
- DE-A- 10 047 222
- DE-A- 19 846 220
- FR-A- 2 780 575

## Beschreibung

Die Erfindung betrifft ein Verfahren sowie eine Vorrichtung zum schnellen Erwärmen eines flüssigkeitsgekühlten Verbrennungsmotors gemäß dem Oberbegriff des Patentanspruches 1 bzw. 4.

Verbrennungsmotoren haben bei Betriebstemperatur einen wesentlich höheren Wirkungsgrad als unmittelbar nach dem Start und arbeiten daher im erwärmten Zustand optimal. Insbesondere bei niedrigen Umgebungstemperaturen und geringer Belastung kann es eine beträchtliche Zeit dauern, bis sich der Motor erwärmt hat. Bei Dieselmotoren mit hohen Wirkungsgraden spielt diese Problematik eine noch gravierendere Rolle.

Um den Verbrennungsmotor möglichst rasch auf Betriebstemperatur zu erwärmen, sind z.B. elektrische Zusatzheizungen bekannt, die das Kühlwasser nach dem Start aufheizen. Dabei ist üblicherweise ein Heizwiderstand vorgesehen, der direkt vom Generator mit Energie versorgt wird und das Kühlwasser in kurzer Zeit aufheizt. Die bekannten Kühlwasserheizungen sind jedoch relativ kompliziert aufgebaut und benötigen insbesondere zusätzliche Heizelemente zur Aufheizung des Motors.

Aus der DE 31 28 081 A sind eine Vorrichtungen zum schnellen Erwärmen eines flüssigkeitsgekühlten Verbrennungsmotors, beispielsweise eines Fahrzeugmotors bekannt, bei dem ein Generator zum Erwärmen der Kühlflüssigkeit eingesetzt wird. Dieser Generator ist zusätzlich zum üblichen Generator vorhanden und wird ausschließlich zur Erzeugung von Heizleistung betrieben, beispielsweise mit kurz geschlossenen Ständerwicklungen. Die Heizleistung des üblichen Generators kann zusätzlich verwendet werden. Eine spezielle Ansteuerung des üblichen Generators zur Steigerung seiner Heizleistung wird nicht vorgeschlagen.

Es ist daher die Aufgabe der vorliegenden Erfindung, eine Kühlwasserheizung mit wesentlich einfacherem Aufbau zu schaffen.

Gelöst wird diese Aufgabe durch die im Patenanspruch 1 bzw. 4 angegebenen Merkmale. Weitere Ausgestaltungen der Erfindung sind Gegenstand von Unteransprüchen.

Der wesentliche Gedanke der Erfindung besteht darin, die Verlustleistung eines Generators, insbesondere eines Kurbelwellen-Starter-Generators, zum Erwärmen des Kühlwassers eines Verbrennungsmotors zu nutzen. Der Generator ist vorzugsweise ein permanenterregter Synchrongenerator, der ebenfalls an den Kühlwasserkreislauf des Verbrennungsmotors angeschlossen ist.

Zur Bereitstellung einer ausreichenden Menge an Heizleistung wird der Generator während einer Heizphase in einem Arbeitspunkt mit großer, vorzugsweise maximaler, Verlustleistung, und bei Betriebstemperatur des Motors in einem Arbeitspunkt mit kleiner, vorzugsweise minimaler, Verlustleistung betrieben. Der Wirkungsgrad des Generators kann entweder anhand von Schwellenwerten oder Kennlinien geregelt werden. D.h., der Generator-Wirkungsgrad kann beispielsweise anhand von Temperatur-Schwellenwerten stufenweise oder anhand von Kennlinien kontinuierlich in Abhängigkeit von der Motor- bzw. Kühlmitteltemperatur eingestellt werden.

Die Einstellung des Generator-Wirkungsgrades erfolgt mittels einer geeigneten Einrichtung, beispielsweise mittels eines Pulswechselrichters, vorzugsweise durch Änderung der Phasenlage zwischen Generatorstrom und Generatorspannung.

Eine besonders effektive Erwärmung des Kühlwassers kann erreicht werden, wenn zu diesem Zweck ein Kurbelwellen-Starter-Generator (KSG) verwendet wird.

Die Erfindung wird nachstehend anhand der beigefügten Zeichnungen beispielhaft näher erläutert. Es zeigen:
Figur 1 ein schematisches Ersatzschaltbild eines Kurbelwellen-Starter-Generators;
Figur 2 eine Darstellung von Strömen und Spannungen im Ersatzschaltbild von Figur 1 bei maximaler Generatorleistung; und
Figur 3 eine Darstellung von Strömen und Spannungen im Ersatzschaltbild von Figur 1 bei minimaler und maximaler Generator-Verlustleistung.

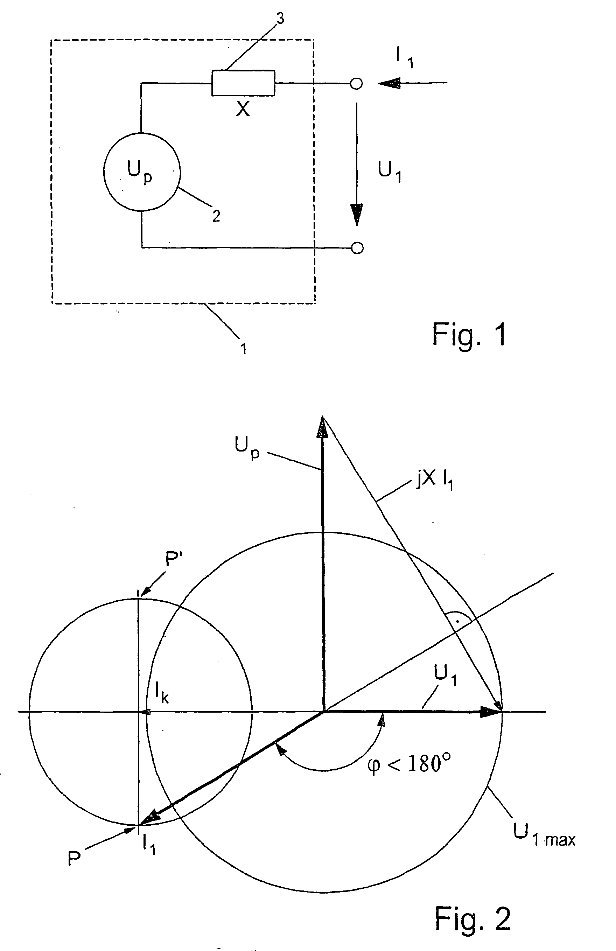

Figur 1 zeigt das Ersatzschaltbild eines Kurbelwellen-Starter-Generators (KSG) der als permanent erregte Synchronmaschine 1 aufgebaut und über einen Pulswechselrichter (nicht gezeigt) mit dem Bordnetz eines Fahrzeugs verbunden ist.

Die Synchronmaschine 1 wird im wesentlichen durch eine innere Spannungsquelle 2 mit einer Polradspannung Up und einen induktiven Widerstand 3 charakterisiert. Der ohmsche Wicklungswiderstand kann für das Betriebsverhalten vernachlässigt werden, er ist jedoch für die Verluste (3*R*I²) verantwortlich.

Die beiden Größen Up und X sind proportional zur Frequenz bzw. Drehzahl der Maschine 1. Die Polradspannung Up der Synchronmaschine 1 ist somit bei einer gegebenen Drehzahl konstant, und die Klemmenspannung U1 der Synchronmaschine 1 ist ebenfalls konstant, mit einem Maximalwert U1=U1max, der durch die Batterie-, oder die Netzspannung vorgegeben ist.

Die Synchronmaschine 1 arbeitet fast im gesamten Generator-Betriebsbereich im sogenannten Feldschwächbereich. Das bedeutet, dass die Polradspannung Up größer ist als die maximale Klemmenspannung U1 der Synchronmaschine 1.

Figur 2 zeigt ein Strom-Spannungs-Diagramm in der komplexen Ebene für den Volllastbetrieb (der KSG 1 erzeugt die volle Generatorleistung). Wird die Polradspannung Up der Synchronmaschine 1 in der komplexen Ebene auf die reelle Achse gelegt, so kann die Klemmenspannung U1 der Synchronmaschine 1 auf einem Kreis mit dem Radius der maximalen Klemmenspannung Ulmax wandern (je nach Einstellung des Phasenwinkels durch die Elektronik).

Der sich dabei ergebende Maschinenstrom I1 besitzt als Ortskurve ebenfalls einen Kreis. Der Mittelpunkt des Stromkreises liegt auf der Spitze des Kurzschlußstromes Ik (=Up/jX), und der Radius des Stromkreises beträgt U1/jX.

Der Drehmoment bildende Stromanteil des Maschinenstroms I1 liegt parallel zur Polradspannung Up (reeller Anteil von Il). Somit sind die Punkte P,P' maximaler Leistung leicht zu erkennen. In Figur 2 ist der Punkt maximaler Leistung im Generatorbetrieb (untere Hälfte des Stromkreises) mit dem Bezugszeichen P und der Punkt maximaler Leistung im Motorbetrieb (obere Hälfte des Stromkreises) mit dem Bezugszeichen P' bezeichnet.

Die Spannung über den induktiven Innenwiderstand jXI1 ergibt sich nach der Kirchhoffschen Maschenregel mit jXI1=-Up+U1 in der Darstellung von Figur 2 als Spannungsvektor jXI1 zwischen den Vektoren Up und U1.

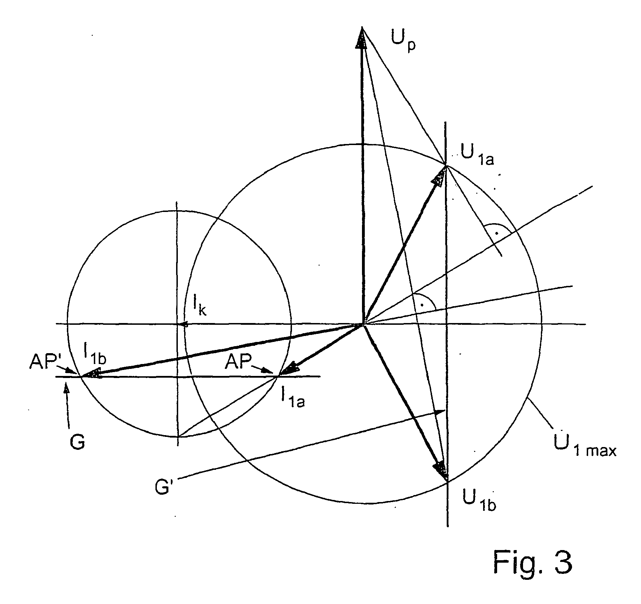

Figur 3 zeigt ein Strom-Spannungs-Diagramm der Synchronmaschine 1 für den sogenannten Teillastbereich (der KSG liefert weniger als die volle Generatorleistung).

Im sogenannten Blockbetrieb (U1=Ulmax) des Umrichters existieren jeweils zwei Arbeitspunkte AP,AP', bei denen eine geforderte Leistung erreicht wird.

Eine Generator-Regelung (nicht gezeigt) ist bei ausreichend hoher Motortemperatur normalerweise so eingestellt, dass sie den Arbeitspunkt AP mit dem Index a (U1a,I1a) einstellt. In diesem Arbeitspunkt AP wird die geforderte Generatorleistung P_{G}=3*Up·I1·cosPhi mit minimalem Maschinenstrom I1 und damit auch mit den kleinsten ohmschen Verlusten erzeugt.

Entlang der geraden G mit konstanter Leistung (hier ist der Realteil des Maschinenstroms Il immer gleich groß) existiert ein zweiter Arbeitspunkt AP' mit der selben generatorischen Leistung, jedoch mit deutlich größerem Maschinenstrom I1b. In diesem Arbeitspunkt AP' ist der reelle Anteil (q-Anteil) des Stromes I1 (parallel zu Up) gleich groß wie im ersten Arbeitspunkt AP, jedoch ist der imaginäre Anteil (d-Anteil) des Stromes (quer zu Up) deutlich größer. Somit ist hier der Arbeitspunkt AP' mit den größten ohmschen Verlusten erreicht, die wiederum zur Aufheizung des Kühlwassers und somit zur Erwärmung des Motors genutzt werden können.

wird vom bisher betrachteten Blockbetrieb des Umrichters (U1=U1max) abgewichen und auch kleinere Werte für die Klemmenspannung U1 zugelassen, so können die ohmschen Verluste bzw. der Generator-Wirkungsgrad entlang der Geraden G,G' konstanter Leistung beliebig eingestellt werden. Somit können die Kupferverluste in der Synchronmaschine 1 innerhalb der beiden Grenzwerte I1a,I1b beliebig variiert werden.

Zu Zwecken der Kühlwassererwärmung ist eine kontinuierliche Regelung des Generator-Wirkungsgrades in Abhängigkeit von der Motortemperatur nicht unbedingt erforderlich. Vielmehr genügt in der Regel die Einstellung des Arbeitspunktes AP' maximaler Verluste in der Heizphase, und nach der Heizphase, wenn sich der Motor auf Betriebstemperatur befindet, der Betrieb im Arbeitspunkt AP minimaler Verluste.

Bei dieser Betrachtung ist zu beachten, dass der Stromkreis mit wachsender Drehzahl des Generators 1 kleiner wird. Hierdurch wird die Möglichkeit, die Verlustleistung zu erhöhen, eingeschränkt. Für die Kühlwasserheizung ist jedoch der Leerlauf (ca. 700-800 1/min.) des Verbrennungsmotors von besonderer Bedeutung.

Bei höheren Drehzahlen arbeitet der Verbrennungsmotor zum einen meist mit größeren Lasten und erzeugt selbst eine größere Verlustleistung, und zum anderen wachsen im KSG die Drehzahl abhängigen Verluste, wie z.B. die Eisenverluste.

### Bezugszeichenliste

- 1: Generator
- 2: Stromquelle
- 3: Blindwiderstand
- U1: Klemmenspannung
- I1: Klemmenstrom
- AP: Arbeitspunkt minimaler Verlustleistung
- AP': Arbeitspunkt maximaler Verlustleistung
- Up: Polradspannung

## Patentansprüche

1. Verfahren zum schnellen Erwärmen eines flüssigkeitsgekühlten Verbrennungsmotors eines Fahrzeugs durch Erwärmung der Kühlflüssigkeit, **dadurch gekennzeichnet, dass** die Kühlflüssigkeit mittels eines Synchrongenerators (1) des Fahrzeugs erwärmt wird, der während einer Heizphase bei kaltem Verbrennungsmotor in einem Arbeitspunkt (AP';U1b,I1b) mit großer Verlustleistung und bei Betriebstemperatur des Verbrennungsmotors in einem Arbeitspunkt (AP;U1a,I1a) mit kleiner Verlustleistung betrieben wird.

2. Verfahren nach Anspruch 1, **dadurch gekennzeichnet, dass** der Generator (1) bei kaltem Motor in einem Arbeitspunkt (AP';U1b,I1b) mit maximaler Verlustleistung, und, wenn sich der Motor auf Betriebstemperatur befindet, in einem Arbeitspunkt (AP;U1a,I1a) mit minimaler Verlustleistung betrieben wird.

3. Verfahren nach Anspruch 1 oder 2, **dadurch gekennzeichnet, dass** der Wirkungsgrad des Generators (1) anhand von Schwellenwerten oder Kennlinien in Abhängigkeit von der Motor- bzw. Kühlmitteltemperatur eingestellt wird.

4. Vorrichtung zum schnellen Erwärmen eines flüssigkeitsgekühlten Verbrennungsmotors eines Fahrzeugs, **gekennzeichnet durch** einen Generator (1) des Fahrzeugs zum Erwärmen der Kühlflüssigkeit, der während einer Heizphase bei kaltem Verbrennungsmotor in einem Arbeitspunkt (AP';U1b,I1b) mit großer Verlustleistung, und bei Betriebstemperatur des Verbrennungsmotors in einem Arbeitspunkt (AP;U1a,I1a) mit kleiner Verlustleistung betrieben wird.

5. Vorrichtung nach Anspruch 4, **dadurch gekennzeichnet, dass** der Generator (1) ein Kurbelwellen-Starter-Generator ist.

6. Vorrichtung nach Anspruch 4 oder 5, **dadurch gekennzeichnet, dass** ein Pulswechselrichter zur Einstellung des Generator-Wirkungsgrades vorgesehen ist.

## Claims

1. Method for rapidly heating a liquid-cooled internal combustion engine of a vehicle by heating the cooling liquid, **characterized in that** the cooling liquid is heated by means of a synchronous generator (1) of the vehicle, which synchronous generator is operated at an operating point (AP'; U1b, I1b) with a large power loss during a heating phase when the internal combustion engine is cold and is operated at an operating point (AP; U1a, I1a) with a low power loss at the operating temperature of the internal combustion engine.

2. Method according to Claim 1, **characterized in that** the generator (1) is operated at an operating point (AP'; U1b, I1b) with a maximum power loss when the engine is cold, and is operated at an operating point (AP; U1a, I1a) with a minimum power loss when the engine is at the operating temperature.

3. Method according to Claim 1 or 2, **characterized in that** the efficiency of the generator (1) is set on the basis of the threshold values or characteristic curves as a function of the engine and/or coolant temperature.

4. Apparatus for rapidly heating a liquid-cooled internal combustion engine of a vehicle, **characterized by** a generator (1) of the vehicle for heating the cooling liquid, which generator is operated at an operating point (AP'; U1b, I1b) with a large power loss during a heating phase when the internal combustion engine is cold and is operated at an operating point (AP; U1a, I1a) with a low power loss at the operating temperature of the internal combustion engine.

5. Apparatus according to Claim 4, **characterized in that** the generator (1) is a crankshaft starter generator.

6. Apparatus according to Claim 4 or 5, **characterized in that** a pulse-controlled inverter is provided for setting the generator efficiency.

## Revendications

1. Procédé de chauffage rapide d'un moteur à combustion interne à refroidissement par liquide d'un véhicule, par chauffage du liquide de refroidissement,
**caractérisé en ce qu'**
on chauffe le liquide de refroidissement à l'aide d'un générateur synchrone (1) du véhicule, et qui au cours de la phase de chauffage lorsque le moteur à combustion interne est froid, et qui pendant la phase de chauffage lorsque le moteur à combustion interne est froid, fonctionne à un point de travail (AP' ; U1b, I1b) à perte de puissance importante et qui pour la température de fonctionnement du moteur à combustion interne fonctionne à un point de fonctionnement (AP ; U1a, I1a) à perte de puissance faible.

2. Procédé selon la revendication 1,
**caractérisé en ce que**
lorsque le moteur est froid, le générateur (1) fonctionne à un point de fonctionnement (AP' ; U1b, I1b) avec perte de puissance maximale et lorsque le moteur est à sa température de fonctionnement il fonctionne à un point de fonctionnement (AP ; U1a, I1a) à perte de puissance minimale.

3. Procédé selon la revendication 1 ou 2,
**caractérisé en ce que**
le rendement du générateur (1) se règle à l'aide des valeurs de seuil ou des courbes caractéristiques en fonction de la température du moteur ou du fluide de refroidissement.

4. Dispositif pour chauffer rapidement un moteur à combustion interne refroidi par liquide d'un véhicule automobile,
**caractérisé par**
un générateur (1) du véhicule pour chauffer le liquide de refroidissement et qui pendant la phase de chauffage, lorsque le moteur à combustion interne est froid, travaille à un point de fonctionnement (AP' ; U1b, I1b) à perte de puissance forte et qui pour la température de fonctionnement du moteur à combustion interne travaille à un point de fonctionnement (AP ; U1a, I1a) à perte de puissance faible.

5. Dispositif selon la revendication 4,
**caractérisé en ce que**
le générateur (1) est un générateur/ démarreur associé à un vilebrequin.

6. Dispositif selon la revendication 4 ou 5,
**caractérisé par**
un redresseur impulsionnel pour régler le rendement du générateur.
